# EUROPEAN PATENT APPLICATION

(11) **EP 1 926 010 A2**
(43) Date of publication of application: **28.05.2008**
(21) Application number: 07022556.0
(22) Date of filing: 21.11.2007
(51) Int. Cl.: G05D 23/19

(54) **Temperature regulation method of microfluidic chip, sample analysis system and microfluidic chip**

(30) Priority: 22.11.2006 JP 2006316126; 15.11.2007 JP 2007297004
(71) Applicant: FUJIFILM Corporation, Minato-ku Tokyo (JP)
(72) Inventor: Karaki, Hideyuki, Minami-Ashigara-shi Kanagawa (JP); Fujikura, Tatsuo, Ashigarakami-gun Kanagawa (JP); Wakabayashi, Akira, Minami-Ashigara-shi Kanagawa (JP); Iwaki, Yoshihide, Ashigarakami-gun Kanagawa (JP)
(74) Representative: HOFFMANN EITLE

(57) **Abstract**

A temperature regulation method of a microfluidic chip for controlling a temperature of a liquid accumulated in a reaction channel formed in a flat plate of the microfluidic chip, the method includes: heating the reaction channel to a reaction temperature; and at the same time as the reaction channel is heated to the reaction temperature, keeping a first channel communicating with one end of the reaction channel and a second channel communicating with an opposite end of the reaction channel at the same temperature different from the reaction temperature by heating or cooling.

## Description

### Background of the Invention

### 1. Field of the Invention

This invention relates to a temperature regulation method of a microfluidic chip, a sample analysis system, and a microfluidic chip used when analysis, chemical reaction, etc., is conducted using various samples.

### 2. Description of the Related Art

The recent progress of molecular biology has indicated that the effect of medicine administration in disease treatment and an individual difference of a side effect caused by a constitutional predisposition can be predicted by analyzing a biological material of blood, etc., and using this, there has been a growing trend to conduct optimum treatment for each individual. For example, if it is known that there is strong correlation between a specific gene and the effect and side effect of a specific curative medicine, to make the information useful for treatment of a specific patient, the base sequence of the genes of the patient needs to be known. Gene diagnosis to obtain information concerning mutation in endogenous genes or single nucleotide polymorphism (SNP) can be conducted by amplification and detection of a target nucleic acid containing such mutation or single nucleotide polymorphism. Thus, a simple and easy method of capable of amplifying and detecting the target nucleic acid in a sample rapidly and precisely is demanded.

Particularly, nucleic acid amplification reaction using a PCR (Polymerase Chain Reaction) method is a basic technology in the biotechnology field. The PCR method is a method of performing temperature regulation of a reaction liquid of a mixture of template DNA, a primer, a substrate, a heat resistant polymerase enzyme, etc., and changing the reaction liquid to predetermined three types of temperatures in sequence repeatedly, thereby amplifying the target DNA. Specifically, the temperature of the reaction liquid is regulated to a temperature to conduct denaturation reaction for dissociating double stranded DNA to single-stranded DNA and subsequently is regulated to a temperature to conduct annealing reaction for associating a primer with the single-stranded DNA and further subsequently is regulated to a temperature to conduct double stranded elongation reaction using a heat resistant polymerase enzyme. Thus, the temperature of the reaction liquid is regulated to three steps of temperatures in sequence, whereby DAN can be amplified.

This kind of art includes, for example, a nucleic acid amplification substrate disclosed in JP-A-2006-115741. The nucleic acid amplification substrate is formed in a part with a reaction liquid reservoir section, reaction liquid containing a component required for nucleic acid amplification reaction is filled into the reaction liquid reservoir section, the temperature of the reaction liquid reservoir section is regulated, and nucleic acid amplification reaction is performed in the reaction liquid reservoir section for amplifying the nucleic acid. That is, the nucleic acid amplification substrate has a first layer made of a glass plate and a second layer made of silicon rubber, which are deposited on each other, a gap is formed between the first layer and the second layer, and nucleic acid amplification and separation channels are formed according to the gap pattern (groove pattern). The nucleic acid amplification and separation channel is provided with the reaction liquid reservoir section, which is connected to a liquid supply path and a liquid exhaust path. A given quantity of liquid is allowed to flow from the reaction liquid supply path into the reaction liquid reservoir section and the liquid is heated for a given time for producing a predetermined temperature atmosphere, thereby making it possible to amplify DNA.

### Summary of the Invention

In the nucleic acid amplification substrate in the related art described above, however, a given quantity of liquid is placed at a predetermined position in the channel (reaction liquid reservoir section) and the liquid is heated for a given time; the liquid communicates with the channel (liquid supply path, liquid exhaust path) upstream and downstream and as the liquid is heated, it evaporates and the liquid quantity may decrease and the liquid may concentrate. If the liquid quantity thus decreases and the liquid concentrates, for example, to inspect the reaction liquid reservoir section by fluorescence detection, stable detection is made impossible; this is a problem.

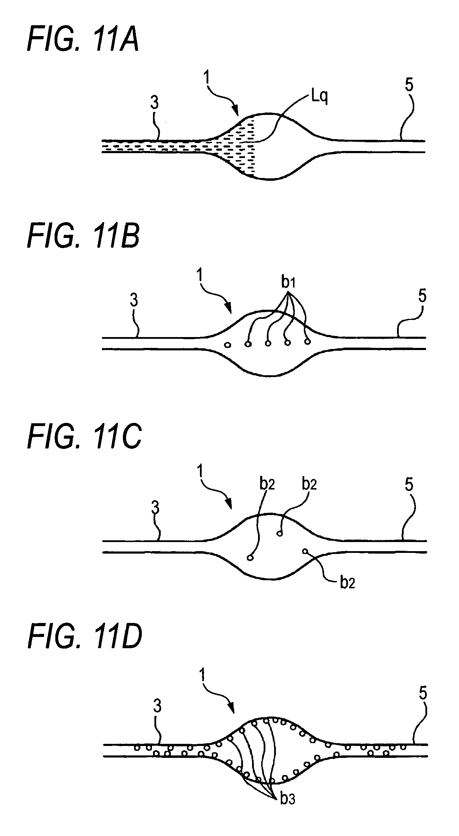

In the upstream and downstream channels of the liquid, the atmospheric pressure rises due to evaporation of moisture and expansion of air and an atmospheric pressure difference occurs between the upstream and downstream channels. That is, from the heated reaction liquid reservoir section, an equal heat quantity is attempted to be transmitted to the liquid supply path and the liquid exhaust path, but a difference occurs in the temperature between both the channels, namely, in the internal pressure of the channels from the heat capacity difference caused by the channel shape difference, etc., and a phenomenon in which the liquid in the reaction liquid reservoir section moves occurs. Accordingly, as shown in FIG. 11A, heated liquid Lq moves from a reaction liquid reservoir section 1 to a liquid supply path 3 and a liquid exhaust path 5 and if fluorescence detection inspection is conducted in the reaction liquid reservoir section 1, a problem of making stable detection impossible occurs like a problem as described above.

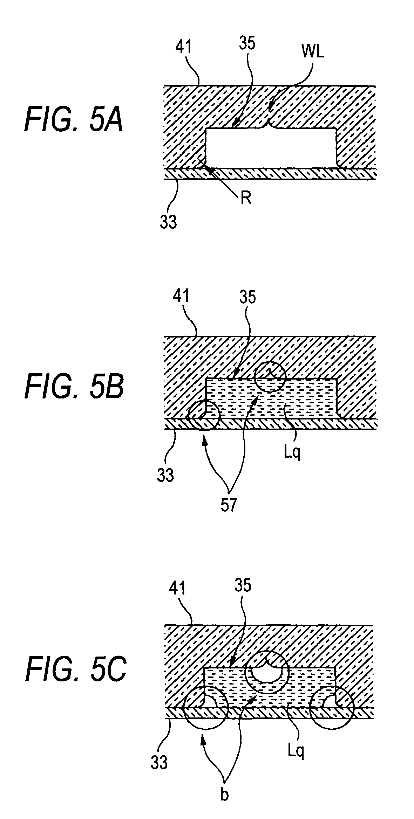

Further, when the substrate is made of a resin molding material, if a minute space is formed for some cause such that a resin fill failure part of a weld line, etc., exists in the reaction liquid reservoir section 1, that when a lid is attached to a substrate groove, adhesive application unevenness occurs, or that accuracy failure of the molding die occurs (see weld line WL, chamfer radius R in FIG. 5A), when liquid is introduced into the reaction channel, it does not flow into the minute space occurring for the cause and minute wet residue, namely, a minute air pocket is produced (see FIG. 5B). If an air bubble b occurs as the air pocket expands and grows by heating (see FIG. 5C), a problem of degradation of accuracy of fluorescence detection occurs like a problem as described above. FIG. 11B shows how air bubbles b1 occur when a weld line exists; FIG. 11C shows how air bubbles b2 occur when adhesive application unevenness exists; and FIG. 11D shows how air bubbles b3 occur when chamfer radius R of channel corner in channel cross section is large.

It is therefore an object of the invention to provide a temperature regulation method of a microfluidic chip, a sample analysis system, and a microfluidic chip wherein a decrease in the liquid quantity and concentration of the liquid accompanying evaporation, a move of liquid, and occurrence of an air bubble can be suppressed when a given amount of liquid is heated in a channel of the microfluidic chip for obtaining any desired chemical reaction and intend stable detection of the reaction state of the sample.

The object of the invention is accomplished by the following configurations:
(1) A temperature regulation method of a microfluidic chip for controlling a temperature of a liquid accumulated in a reaction channel formed in a flat plate of the microfluidic chip, the method comprising:
   heating the reaction channel to a reaction temperature; and
   at the same time as the reaction channel is heated to the reaction temperature, keeping a first channel communicating with one end of the reaction channel and a second channel communicating with an opposite end of the reaction channel at the same temperature different from the reaction temperature by heating or cooling.
   According to the temperature regulation method of the microfluidic chip, after the reaction channel is filled with liquid, the center portion between the first channel side and the second channel side is heated at any desired temperature required for chemical reaction and any other place is kept at a different temperature from that temperature by conducting heat regulation, so that a decrease in the liquid quantity and concentration of the liquid accompanying evaporation and a move of liquid can be suppressed and it is made possible to inspect in succession the chemical reaction proceeding only in the center portion of the reaction channel.
(2) The temperature regulation method as described in (1) above,
   wherein temperatures of the first channel and the second channel are regulated to temperatures lower than the reaction temperature.
   According to the temperature regulation method of the microfluidic chip, the center portion of the reaction channel is heated at any desired temperature required for chemical reaction and the liquid at any other place is kept at temperatures lower than the reaction temperature by conducting heat regulation, so that if a plurality of the reaction channels are arranged in parallel, chemical reaction does not occur in each end part of the reaction channel or the proceeding speed is extremely low and thus a plurality of chemical reactions can be advanced independently without receiving the effect of the contamination from the adjacent channel. Further, it is possible to prevent the liquid in the reaction channel from evaporation.
(3) The temperature regulation method as described in (2) above,
   wherein the temperatures of the first channel and the second channel are regulated to a range of 20°C to 30°C.

According to the temperature regulation method of the microfluidic chip, the first channel and the second channel are regulated to the ambient temperature (20°C to 30°C), so that the temperature difference from the reaction section is suppressed to be small and it is possible to prevent the temperature of the reaction section from being unstable.
(4) The temperature regulation method as described in any of (1) to (3) above,
   wherein after a liquid is poured from the first channel to the reaction channel, before the heating is conducted, the first channel is drained of the liquid and the liquid is left only in the reaction channel.
   According to the temperature regulation method of the microfluidic chip, before the heating is conducted, the first channel is drained of the liquid, whereby the first channel and the second channel become free of liquid and the liquid is left only in the reaction channel. Therefore, the liquid in the reaction channel is sandwiched between air layers of the first channel and the second channel, it becomes hard to receive the effect of the reaction from the adjacent channel, and it is made possible to advance chemical reaction independently.
(5) The temperature regulation method as described in any of (1) to (4) above,
   wherein before the heating is conducted, a plurality of openings communicating with the first channel and the second channel are hermetically sealed.
   According to the temperature regulation method of the microfluidic chip, before the heating is conducted, the openings at both ends of the reaction channel are hermetically sealed and reaction is conducted in the hermetically sealed state. This means that the first channel and the second channel become a hermetically sealed space, evaporation of saturated vapor pressure or more does not occur, and the effect of suppressing of evaporation of liquid can be provided and at the same time, the risk of allowing liquid, for example, amplified DNA to flow out from the chip, polluting the environment, and causing carry over is circumvented.
(6) A sample analysis system, comprising:
   a microfluidic chip comprising: a reaction channel formed in a flat plate; a first channel communicating with one end of the reaction channel; and a second channel communicating with an opposite end of the reaction channel;
   a first heat regulation unit that controls a temperature of a liquid poured into the reaction channel; and
   a second heat regulation unit that controls temperatures of the first channel and the second channel.
   According to the sample analysis system, while the liquid in the reaction channel is heated to any desired reaction temperature by the first heat regulation unit, the first channel and the second channel in contact with the liquid can be set to the same temperature and if the first channel and the second channel differ in heat capacity because of the channel shape difference, etc., the internal pressures of the channels become the same.
(7) The sample analysis system as described in (6) above,
   wherein the second heat regulation unit controls a temperature of a liquid at the end of the reaction channel in contact with the first channel and a temperature of a liquid at the end of the reaction channel in contact with the second channel.
   According to the sample analysis system, the liquids in the reaction channel in contact with the first channel and the second channel are regulated to the same temperature and heat is not transmitted from the liquid in the reaction channel to the first channel or the second channel and the internal pressures of the first channel and the second channel become the same with higher accuracy. This means that a move of liquid in the reaction channel can be suppressed more reliably.
(8) The sample analysis system as described in (6) or (7) above, further comprising:
   a detection unit that detects a reaction state of the liquid poured into the reaction channel and that is placed opposite to the reaction channel.
   According to the sample analysis system, a sensor, etc., is not exposed to the reaction channel and liquid is not contaminated.
(9) The sample analysis system as described in (8) above,
   wherein the detection unit measures fluorescence emitted by exciting the liquid in the reaction channel.
   According to the sample analysis system, double stranded DNA amplified by reaction in the reaction channel is intercalated, whereby it emits strong fluorescence. As the fluorescence strength is measured, it is made possible to detect the presence or absence of a gene sequence as a target.
(10) The microfluidic chip, which is utilized in the sample analysis system as described in any of (6) to (9) above, the microfluidic chip further comprising:
   a reagent previously put as a drip on an upper side of the reaction channel in a dry state.
   According to the microfluidic chip, when the reaction channel is heated from the lower face, the reagent dissolved with temperature rise of the liquid flows to the lower side of the channel by gravity and the reagent and the liquid are mixed by natural convection.
(11) The microfluidic chip as described in (10) above,
   wherein the reagent is previously put as a drip in a dry state on a channel center between the first channel side and the second channel side in the reaction channel.
   According to the microfluidic chip, only the center portion of the reaction channel on which a dry reagent is put as a drip is heated and a dry reagent does not exist on the first channel side or the second channel side of the reaction channel and heating is not conducted either and thus chemical reaction does not occur on the first or second channel side of the reaction channel or the proceeding speed is extremely low. Therefore, if the first channel is not drained of liquid, the reactions in the reaction channels do not interfere with each other. The fact that the first channel need not be drained of liquid not only is effective for simplifying the operation sequence, but also makes it possible to ignore the relation of the condition to retain the liquid in the reaction channel when the first channel is drained of the liquid (equivalent tube diameter of first channel) > (equivalent tube diameter of reaction channel), and the equivalent tube diameter of the first channel can be lessened as compared with that when the first channel is drained of the liquid. Consequently the dead volume of the tested liquid can be lessened.
(12) The microfluidic chip as described in (10) or (11) above,
   wherein a plurality of the reaction channels are arranged in parallel.
   According to the microfluidic chip, a plurality of the reaction channels are provided, different types of reaction reagents are previously set in the channel center portions, and a plurality of chemical reactions can be tested at the same time.
(13) The microfluidic chip as described in any of (10) to (12) above,
   wherein an upper wall face of the reaction channel is provided with a slope so that a channel height of the channel center between the first channel side and the second channel side in the reaction channel becomes lower than heights of any other than the center of the reaction channel.
   According to the microfluidic chip, if an air bubble occurs in the channel at the heating time, the air bubble is prevented from moving to the center of the channel and is prevented from remaining therein and an air bubble occurring in the center promptly moves in the both-end direction. Accordingly, degradation of the fluorescence detection accuracy is prevented.
(14) The microfluidic chip as described in (13) above,
   wherein as the slope, the upper wall face is formed as a curved surface shaped like an upside-down convex projecting into the reaction channel.
   According to the microfluidic chip, the reaction channel is formed with the slope formed of a curved surface shaped like an upside-down convex, so that if an air bubble occurs, it can be smoothly moved to the end part.
(15) The microfluidic chip as described in any of (10) to (14) above,
   wherein an inner wall face of the reaction channel is a continuous smooth face for preventing formation of a minute gap space not filled with a liquid when the liquid flows.
   According to the microfluidic chip, the inner wall face of the reaction channel is a continuous smooth face not formed with a minute gap space and an air bubble is prevented from occurring in the channel at the heating time. Accordingly, degradation of the fluorescence detection accuracy can be prevented.
(16) The microfluidic chip as described in any of (10) to (15) above,
wherein a curvature radius of a bend part of an inner wall face of the reaction channel is 20 µm or less.

According to the microfluidic chip, the curvature radius of a bend part of the inner wall face in the channel becomes 20 µm or less, so that particularly if the wettability of liquid relative to the channel surface is not good (the contact angle is about 50° or more), wet residue becomes hard to occur in the bend part and a situation in which air accumulates in the wet residue part and becomes an air bubble by heating is prevented.

### Brief Description of the Drawings

In the accompanying drawings:
FIG. 1 is a block diagram of a sample analysis system according to the invention;
FIG. 2A is a plan view of a microfluidic chip retention section and FIG. 2B is a rough main part schematic representation as a sectional view taken on line A-A in FIG. 2A;
FIG. 3A is a detailed main part enlarged drawing of a microfluidic chip as a sectional view taken on line A-A in FIG. 2A and FIG. 3B is a main part enlarged drawing of the microfluidic chip as a plan view;
FIG. 4A is a schematic representation of reagent mix situation as a sectional view of a reaction channel where a reagent is put as a drip and FIG. 4B is a schematic representation of reagent mix situation as an enlarged view;
FIGS. 5A to 5C are schematic representations of an air bubble occurrence process in the reaction channel;
FIG. 6 is an enlarged sectional view in the center of the reaction channel;
FIG. 7 is an enlarged sectional view to show another configuration example of a slope provided in the reaction channel shown in FIG. 6;
FIGS. 8A and 8B are schematic representations of operation when liquid is poured into the reaction channel; FIG. 8A is a plan view and FIG. 8B is a sectional view of the reaction channel;
FIGS. 9A and 9B are schematic representations of operation when liquid is excluded from the first channel; FIG. 9A is a plan view and FIG. 9B is a sectional view of the reaction channel;
FIG. 10 is a graph to represent a temperature distribution of the reaction channel and its neighbor; and
FIGS. 11A to 11D are schematic representations to show defective conditions in a channel in a related art.

### Detailed Description of the Invention

A preferred embodiment of a temperature regulation method of a microfluidic chip, a sample analysis system, and a microfluidic chip according to the invention will be discussed in detail with reference to the accompanying drawings.

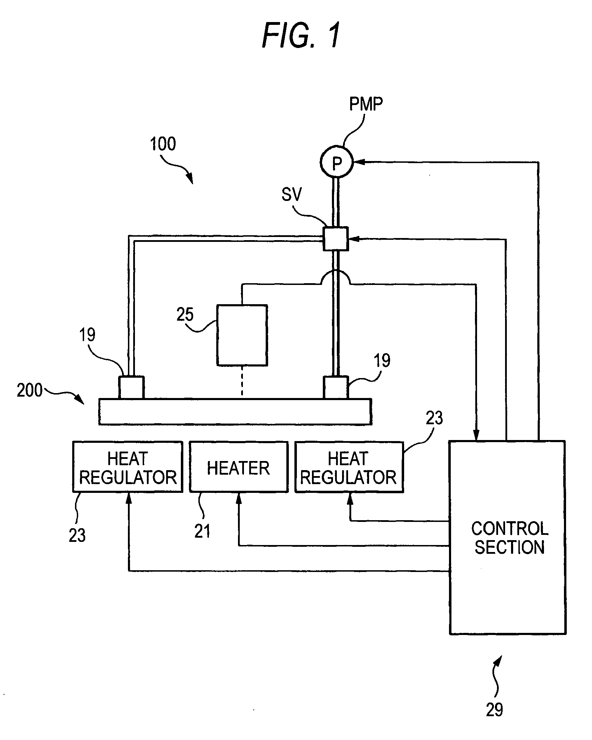

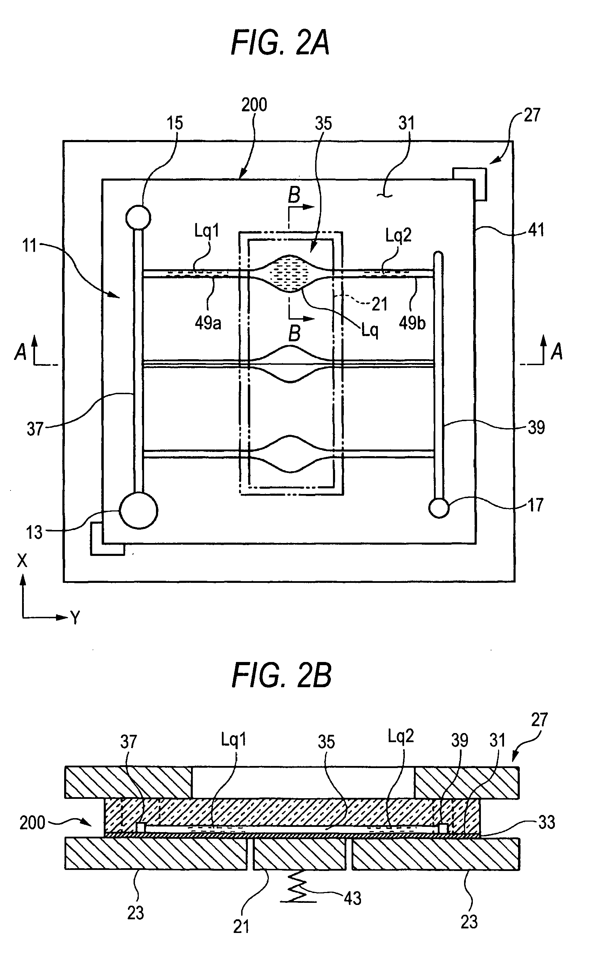

FIG. 1 is a block diagram of the sample analysis system according to the invention, FIG. 2A is a plan view of a microfluidic chip retention section, and FIG. 2B is a rough main part schematic representation as a sectional view taken on line A-A in FIG. 2A.

In the embodiment, a microfluidic chip 200 (also simply called "chip 200") into which a sample is poured is set in a sample analysis system 100. The microfluidic chip 200 is set in the sample analysis system 100, whereby the poured sample liquid is handled by a physical action force from the outside of the chip and, for example, a plurality of target genes of single nucleotide polymorphism are tested. Accordingly, for example, the target nucleic acid is amplified and is detected, whereby it is made possible to amplify and detect the target nucleic acid specific to the pathogen causing an infectious disease, and it is made possible to determine whether or not the pathogen exists in the sample, etc.

In the embodiment, the physical action force is a pneumatic action force (pneumatic drive force) generated by air supply or air suction from a plurality of ports 13, 15, and 17 provided at the start point and the end point of a channel 11 of the chip 200 shown in FIG. 2A. Therefore, it is made possible to perform move control of liquid supplied to the channel 11 to any desired position in the channel by air supply or air suction acted on the start point and the end point of the channel.

The sample analysis system 100 is provided with basic components of a pump PMP using air as a working fluid, a valve SV, a port connector 19 for connecting the pneumatic drive force from the pump PMP through the valve SV to the ports 13, 15, and 17, a sample heating section (heater) 21 of first temperature regulation unit, a heat regulator 23 of second temperature regulation unit, a fluorescence detection section 25 as the detection unit that detects the reaction state of liquid poured into a reaction channel, a positioning mechanism 27 for positioning the microfluidic chip 200, and a control section 29 connected to the components for inputting a detection signal or sending a control signal, as shown in FIG. 1 and FIGS. 2A and 2B.

In the microfluidic chip 200, a flat plate face 31, which is a lower face in the figure is formed with minute grooves and a lid 33 is put on the flat plate face 31, whereby a reaction channel 35 of the minute channel 11 formed in the flat plate, a first channel 37 communicating with one end of the reaction channel 35, and a second channel 39 communicating with an opposite end of the reaction channel 35 are formed.

The heater 21 controls the temperature of the liquid poured into the reaction channel 35. To prevent disturbance of the fluorescence detection section 25, any other than a light emission device such as a halogen lamp may be used as the heater 21 such as a resistance heating member, etc. The heat regulator 23 controls the temperatures of the first channel 37 and the second channel 39. In the embodiment, the heat regulator 23 is provided so as to surround the heater 21, but may be left and right separate bodies in FIG. 2B. For example, a water-cooled heat sink, a Peltier device, etc., can be used as the heat regulator 23.

The DNA amplification reaction is kept at a temperature at which the activity of the used enzyme can be maintained constant by isothermal amplification reaction. The term "isothermal" mentioned here refers to such an almost constant temperature at which an enzyme and a primer can function substantially. Further, the expression "almost constant temperature" is used to mean that temperature change to such an extent that the substantial function of an enzyme and a primer is not impaired is allowed.

In the sample analysis system 100, while the liquid poured into the reaction channel 35 is heated to any desired reaction temperature by the heater 21, the first channel 37 and the second channel 39 in contact with the liquid are set to the same temperature. Accordingly, if the first channel 37 and the second channel 39 differ in heat capacity because of the channel shape difference, etc., the internal pressures of the channels become the same.

The positioning mechanism 27 presses the microfluidic chip 200 from above for making it possible to retain the microfluidic chip 200. At this time, either of the heater 21 and the heat regulator 23 (in the embodiment, the heater 21) may be pressed elastically against the chip 200 with a spring mechanism 43, etc. , so that the heater 21 and the heat regulator 23 come reliably in contact with the microfluidic chip 200. To reliably transmit the heat of the heater 21 and the heat regulator 23 to the chip 200, adherence to the chip 200 (contact area) may be enhanced; preferably an elastic sheet material, etc. , having good thermal conductivity is disposed on the tops of the heater 21 and the heat regulator 23.

Preferably, the heat regulator 23 controls the temperatures of liquid Lq1 at the end of the reaction channel 35 in contact with the first channel 37 and liquid Lq2 at the end of the reaction channel 35 in contact with the second channel 39. The liquids Lq1 and Lq2 in the reaction channel 35 in contact with the first channel 37 and the second channel 39 are regulated to the same temperature, thereby heat is not unevenly transmitted from the liquid Lq in the reaction channel 35 to the first channel 37 or the second channel 39 and the internal pressures of the first channel 37 and the second channel 39 become the same with higher accuracy. Accordingly, a move of liquid in the reaction channel 35 can be suppressed more reliably.

The fluorescence detection section 25 is opposed to the reaction channel 35, so that it is not exposed to the reaction channel 35 and liquid is not contaminated. The fluorescence detection section 25 measures fluorescence emitted from the excited liquid in the reaction channel 35. That is, double stranded DNA amplified by reaction in the reaction channel 35 is intercalated, whereby it emits strong fluorescence. As the fluorescence strength is measured, it is made possible to detect the presence or absence of a gene sequence as a target.

That is, the reaction channel 35 is excited at a wavelength of about 490 nm by the fluorescence detection section 25 and fluorescence of about 520 nm of intercalated cybergreen is measured, whereby amplification of the target DNA is recognized. Therefore, if a nucleic acid sequence as a target exists, an increase in the fluorescence strength is recognized; if a nucleic acid sequence as a target does not exist, an increase in the fluorescence strength is not recognized.

The sample analysis system 100 includes the microfluidic chip 200 formed with the reaction channel 35, the first channel 37, and the second channel 39, the heater 21 for controlling the temperature of the liquid poured into the reaction channel 35, and the heat regulator 23 for controlling the temperatures of the first channel 37 and the second channel 39. Thus, while the liquid in the reaction channel 35 is heated to any desired reaction temperature by the heater 21, the first channel 37 and the second channel 39 in contact with the liquid can be set to the same temperature. Accordingly, if the first channel 37 and the second channel 39 differ in heat capacity because of the channel shape difference, etc. , the temperatures in both the channels, namely, the internal pressures of the channels can be set to the same and a phenomenon in which the liquid in the reaction channel 35 moves can be prevented.

Next, the microfluidic chip 200 will be discussed.

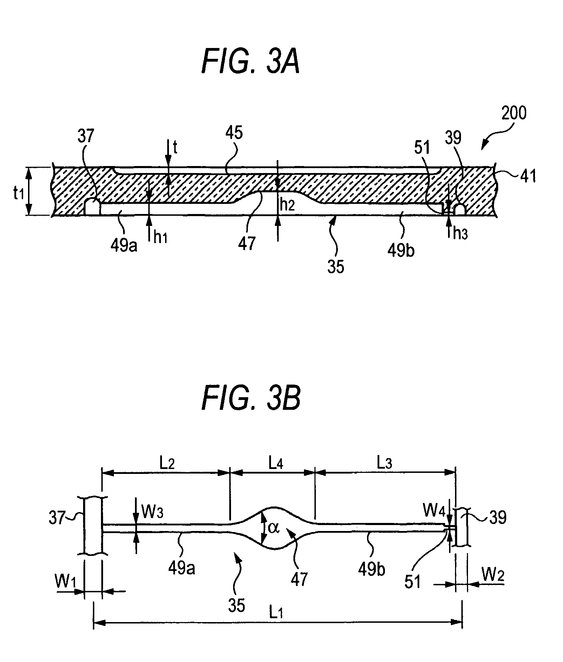

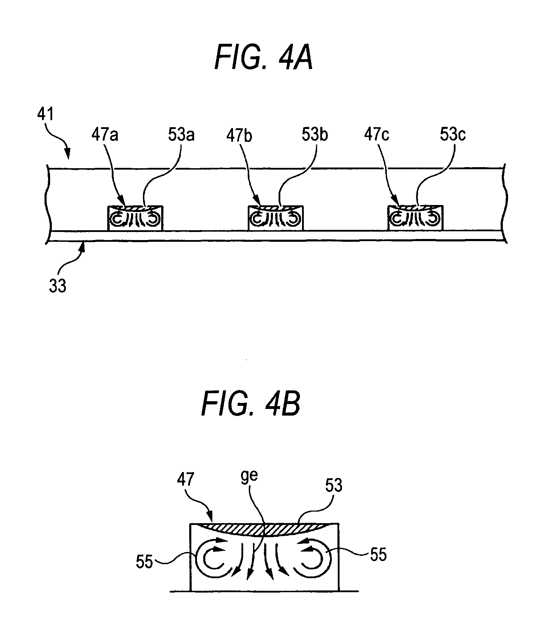

FIG. 3A is a detailed main part enlarged drawing of the microfluidic chip as a sectional view taken on line A-A in FIG. 2A, FIG. 3B is a main part enlarged drawing of the microfluidic chip as a plan view, FIG. 4A is a schematic representation of reagent mix situation as a sectional view of the reaction channel where a reagent is put as a drip, FIG. 4B is a schematic representation of reagent mix situation as an enlarged view, and FIGS. 5A to 5C are schematic representations of an air bubble occurrence process in the reaction channel.

A substrate 41 of the microfluidic chip 200 is formed, for example, as dimensions of 55 x 91 mm as length x width and having a thickness t1 of about 2 mm.

The substrate 41 is manufactured by injection molding of a thermoplastic polymer. Although the polymer to be used is not limited, it is desirable that the polymer should be optically transparent, have high heat resistance, be chemically stable, and be easily injection molded; COP (cycloolefine polymer), COC (cycloolefine copolymer), PMMA (methyl methacrylate resin), etc., is preferred. The expression "optically transparent" is used to mean that transmittance is high in the wavelengths of excitation light and fluorescence used for detection, that scattering is small, and autofluorescence is small. Since the chip 200 has light-transmitting property for making it possible to detect fluorescence, for example, cybergreen is used for a detection reagent and it is made possible to measure fluorescence emitted as it is intercalated into double stranded DNA amplified by reaction.

As shown in FIG. 3A, the more specific dimensions of the components of the microfluidic chip 200 are as follows: Depth t of an excavation 45 above the reaction channel 35 is 0.5 mm; depth h2 of a reaction section 47 becoming the channel center of the reaction channel 35 is 1 mm; depth h1 of connection tube parts 49a and 49b on the left and the right of the reaction section 47 is 0.5 mm; depth h3 of a narrow tube 51 for communicating the connection tube part 49b and the second channel 39 is 0.1 mm; length L1 of the reaction channel 35 is 16 mm; length L2 of one connection tube part 49a is 5.65 mm; length L4 of the reaction section 47 is 4 mm; length L3 of the other connection tube part 49b is 5.75 mm; width W1 of the first channel 37 is 0.5 mm; width W3 of the connection tube part 49a, 49b is 0.3 mm; width W4 of the narrow tube 51 is 0.1 mm; width W2 of the second channel 39 is 0.5 mm; and widening angle α of the reaction section 47 is 60°.

In the embodiment, a plurality of reaction channels 35 are arranged in parallel as shown in FIG. 2A. Each of the reaction channels 35 is connected to the first channel 37 through the connection tube part 49a and is connected to the second channel 39 through the narrow tube 51 and the connection tube part 49b, as shown in FIGS. 3A and 3B. Different types of reaction reagents are previously set in the reaction sections 47 of the reaction channels 35. Accordingly, it is made possible to test a plurality of chemical reactions at the same time.

Reagents 53a, 53b, and 53c are previously put as a drip on the tops of the reaction sections 47a, 47b, and 47c in a dry state as shown in FIGS. 4A and 4B. That is, a water solution of a primer of the target DNA and gelatin is put as a drip and then is cooled, solidified, and fixed. The reaction channels 35 are heated to 60°C, whereby solidified gelatin dissolves and is dispersed in the reaction sections 47 and isothermal amplification reaction is performed. Only a water solution of primer can be put as a drip on the reaction sections 47 and be dried and solidified. In this case, however, when liquid flows into the reaction section, the primer is allowed to flow in the flow direction and reaction, detection in the reaction section cannot be executed. Thus, gelatin hard to dissolve in an ambient-temperature water solution is contained 0.5% and is put as a drip and is solidified.

The water solution of the primer and gelatin is put as a drip and is fixed on the top of the reaction section 47 and is placed on the upper face of the channel as shown in FIGS. 4A and 4B in a microchip use state. After liquid flows in, it is heated from the lid 33 side, namely, the lower face, whereby gelatin ge containing the reagent 53 dissolved with temperature rise of the liquid flows to the lower side of the reaction section 47 by gravity because the specific gravity of the gelatin is large, as shown in FIG. 4B. The liquid is heated from the lower face, thereby causing convection 55 to occur in the reaction section 47. The reagent 53 and the gelatin ge are mixed and diffused uniformly in a short time in the reaction section 47 because of the multiplier effect of the flow to the lower side caused by the gravity of the gelatin ge and the convection 55 caused by heating the liquid.

By the way, in the channel 11 (referring to FIG. 2A), particularly the reaction channel 35, the corner shape of the groove shown in FIGS. 5A to 5C on which the lid 33 is put becomes important. When a reagent is introduced into the reaction channel 35, if chamfer radius R exists in a corner shown in FIG. 5A, the part remains without contacting the reagent as shown in FIG. 5B. The remaining part enters a state in which air 57 accumulates and if heating is executed in this state, the air 57 expands and becomes a large air bubble b as shown in FIG. 5C. This air bubble b causes a defective condition of occurrence of erroneous detection or pushing out liquid to the outside.

Then, to prevent erroneous detection caused by the air bubble b, a slope may be provided so that the channel height of the channel center between the first channel 37 side and the second channel 39 side in the reaction channel 35 becomes lower than any other than the center of the reaction channel. The configuration in which the upper wall face in the reaction channel 35 is thus provided with a slope will be discussed.

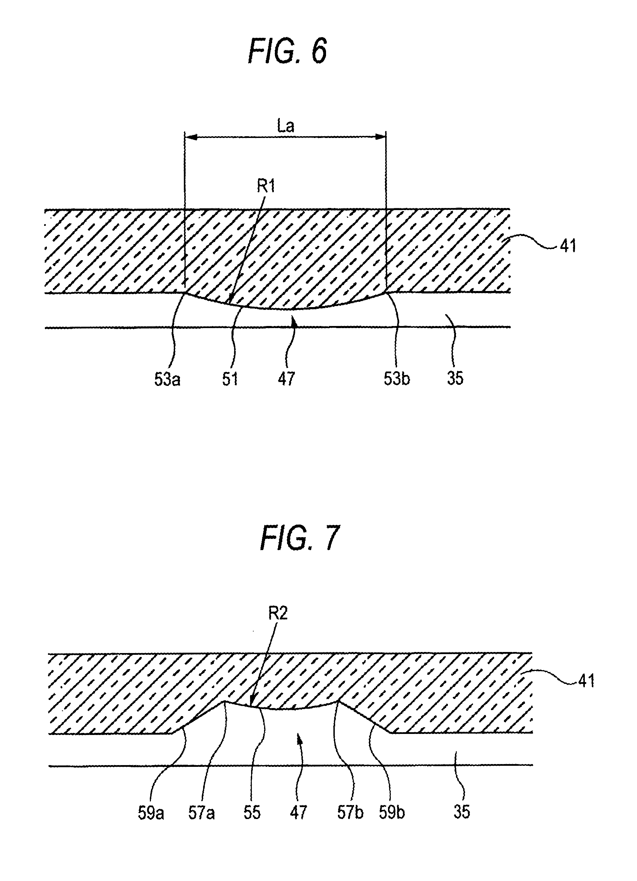

FIG. 6 is an enlarged sectional view in the center of the reaction channel 35.

The reaction section 47 which becomes the center of the reaction channel 35 has the channel height set lower than any other area than the center. This means that the upper wall face of the reaction channel is formed as a curved surface 51 shaped like an upside-down convex projecting into the channel with a radius R1. A spacing La between connection parts 53a and 53b with the flat face of the upper wall face at both ends of the curved surface 51 is set roughly equal to the length L4 of the reaction section 47. Since the curved surface 51 is formed in roughly all area of the reaction section 47, if an air bubble occurs in the reaction channel 35, the air bubble promptly moves to the upward part of the channel along the curved surface 51 in the reaction section 47. Consequently, the air bubble remains in the connection part 53a, 53b or flows into any other area of the reaction channel 35; the air bubble does not move to the observation position of the reaction section 47 (center position of reaction flow detour) and does not remain therein. Therefore, when fluorescence is detected in the reaction section 47, occurrence of a defective condition such as erroneous detection or pushing out liquid to the outside, caused by the air bubble is eliminated and degradation of the fluorescence detection accuracy can be prevented.

FIG. 7 shows another configuration example of a slope provided in the reaction channel 35 shown in FIG. 6.

In this configuration, the reaction channel 35 is close to the shape of the reaction channel 35 shown in FIG. 3A, but the upper wall face of the reaction channel 35 in the reaction section 47 is formed as a curved surface 55 shaped like an upside-down convex projecting into the channel with a radius R2 like that in FIG. 6. End parts 57a and 57b at both ends of the curved surface 55 are formed at positions increasing the channel height as the substrate 41 is dented by means of slopes 59a and 59b. The end parts 57a and 57b are formed of minute curved surfaces and are formed at a higher position of the channel height than the center of the curved surface 55 and thus become a pocket for storing an air bubble. The described configuration makes it possible to prevent an air bubble from moving to the observation position of the reaction section 47 and from remaining therein while keeping the capacity of the reaction section 47 large.

The curved surfaces 51, 55 in FIGS. 6, 7 is not limited to the curved surface shape and may be any shape if the shape prevents an air bubble from moving to the observation position of the reaction section 47 or from remaining therein. For example, the shape may be an upside-down convex shape where two slopes are connected at the center of the reaction section 47 or a shape where one slope is formed roughly over the whole of the reaction section 47.

The above-mentioned problem occurs mainly when the substrate 41 of the chip 200 is manufactured by resin molding. If a mold is worked directly with an end mill, etc., a curved surface having a radius of about 20 µm (even a small one) exists in a corner of the end mill and thus a curved surface is formed in the portion corresponding to the corner on the lid 33 side of the channel groove in the portion of the mold. Resin does not sufficiently spread into the corner and the corner becomes short of filling depending on the molding condition and a larger curved surface is produced on a molded article. Thus, the radius R may be 20 µm or less; preferably 5 µm or less. The radius R is placed in this range, whereby occurrence of an air bubble can be prevented.

To manufacture the microfluidic chip 200 by resin molding, groove WL called weld line may be produced on the bottom of a channel depending on how resin flows at the molding time. If the reaction channel 35 contains the groove WL of the weld line, a large air bubble b occurs according to principle similar to that described above. Like the radius R, the depth of the groove WL may be 20 µm or less; preferably 5 µm or less.

Thus, the curvature radius of a bend part of an inner wall face in the channel 11 becomes 20 µm or less, so that particularly if the wettability of liquid relative to the channel surface is not good (the contact angle is about 50° or more), wet residue becomes hard to occur in the bend part and a situation in which air 57 accumulates in the wet residue part and becomes an air bubble b by heating can be prevented effectively. In other words, the inner wall face of the channel 11 may be a continuous smooth face for preventing formation of a minute gap space not filled with liquid when the liquid flows. Accordingly, an air bubble b is prevented from occurring in the channel at the heating time and degradation of the fluorescence detection accuracy can be prevented.

In the microfluidic chip 200, the lid 33 is put on the flat plate face 31, whereby the channel 11 is formed. The lid 33 is joined to the flat plate face 31 with an adhesive or a pressure sensitive adhesive. A sheet-like polymer which is optically transparent, has high heat resistance, and is chemically stable is used as the lid 33 like the substrate 41. In the embodiment, a PCR plate seal having a thickness of 100 µm is used (a pressure sensitive adhesive is applied to a plastic film).

If a defective condition occurs when a reaction substance leaks to the outside, to place the inside of the microfluidic chip 200 in a hermetically sealed state, preferably all ports 13, 15, and 17 are closed with a seal member such as pressure-sensitive adhesive tape, etc. That is, upon completion of any desired transport, the port connectors 19 are detached from the ports 13, 15, and 17 and pressure-sensitive adhesive tape is put, whereby the chip 200 is placed in a hermetically sealed state. This means that the openings to the reaction channel 35, namely, the first channel 37 and the second channel 39 are hermetically sealed before the reaction channel 35 is heated, and reaction is conducted in the hermetically sealed state. Therefore, the space between the first channel 37 and the second channel 39 becomes a hermetically sealed space, evaporation of saturated vapor pressure or more does not occur, and the effect of suppressing of evaporation of liquid can be provided.

If amplification reaction is executed in a state in which the chip 200 is not hermetically sealed, there is the risk of allowing amplified DNA to flow out from the chip, polluting the environment, and causing carry over; however, it can be prevented by placing the channel of the chip 200 in the hermetically sealed state before amplification reaction. As a sealing method of hermetically sealing the channel of the chip 200, a method of putting a cap having hermeticity on each port or any other known sealing method such as a method of pouring UV cure resin into the ports 13, 15, and 17 and then irradiating it with UV light for solidification can be used in addition to the method of putting pressure-sensitive adhesive tape mentioned above.

Therefore, according to the microfluidic chip 200, the reagent 53 is previously put as a drip in a dry state on the upper face in the channel center between the first channel 37 side and the second channel 39 side in the reaction channel 35, so that the reagent 53 is placed on the upper side of the reaction channel 35 in a microchip use state and is heated from the lower face, whereby the reagent 53 dissolved with temperature rise of liquid Lq flows to the lower side of the channel by gravity, and good mixing of the reagent and the liquid by natural convection is made possible.

Next, a sample analysis method according to the sample analysis system 100 and the microfluidic chip 200 will be discussed.

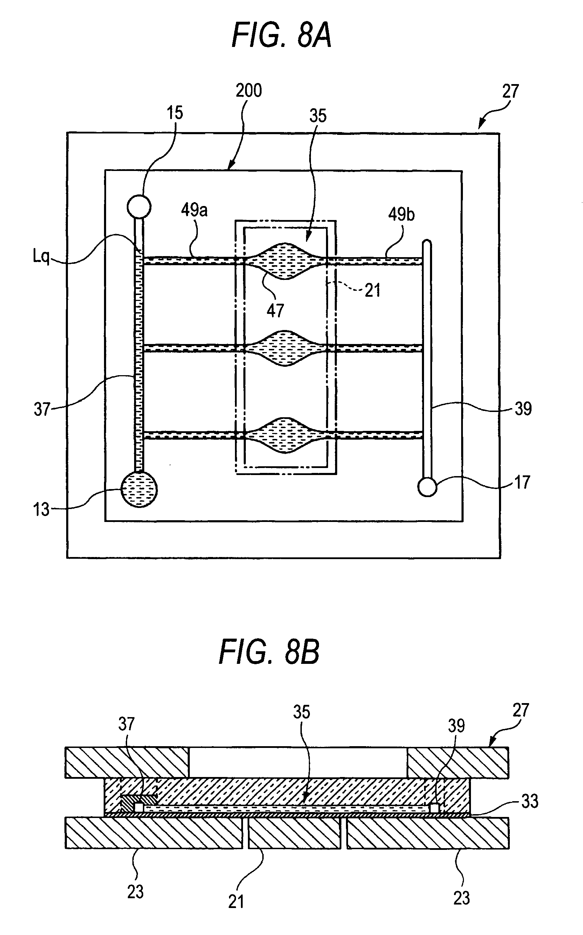

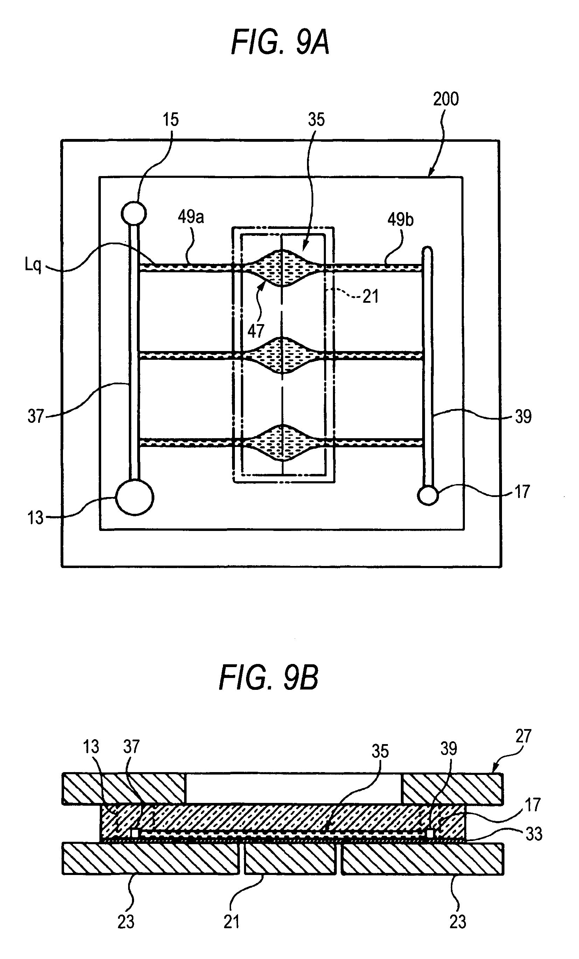

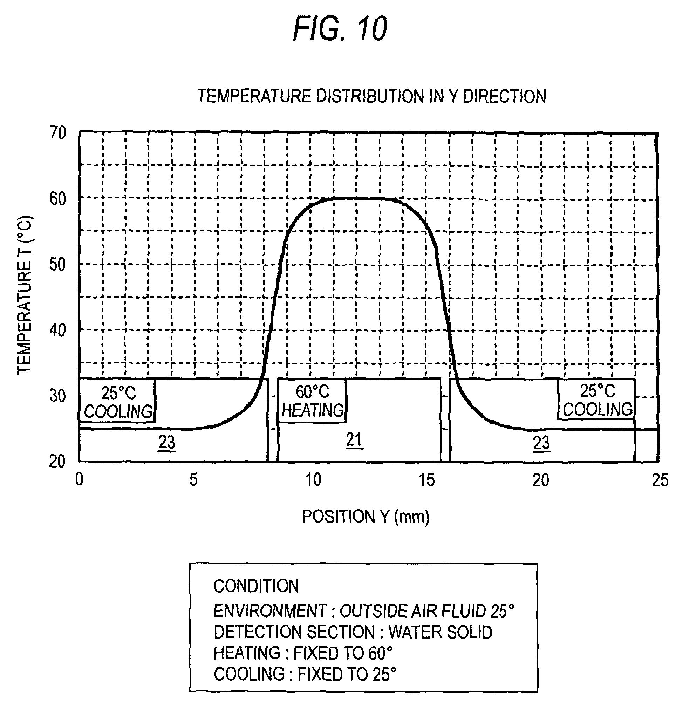

FIGS. 8A and 8B are schematic representations of operation when liquid is poured into the reaction channel; FIG. 8A is a plan view and FIG. 8B is a sectional view of the reaction channel. FIGS. 9A and 9B are schematic representations of operation when liquid is excluded from the first channel; FIG. 9A is a plan view and FIG. 9B is a sectional view of the reaction channel. FIG. 10 is a graph to represent a temperature distribution of the reaction channel and its neighbor.

First, the microfluidic chip 200 is positioned and held in the positioning mechanism 27 of the sample analysis system 100. In this state, the heat regulator 23 is regulated to the ambient temperature (for example, 25°C). Next, a predetermined quantity of reagent is entered through the port 13 and is introduced into the first channel 37.

When the reagent arrives at a place just before the port 15, the transport is stopped. Next, the pressure of the port connector 19 (referring to FIG. 1) connected to the port 17 is reduced by the pump PMP and the reagent is introduced into the reaction channel 35 as shown in FIGS. 8A and 8B. Next, the port 17 is closed and the port connector 19 connected to the port 15 is pressurized by the pump PMP and the reagent remaining in the first channel 37 is pushed back to the port 13 as shown in FIGS. 9A and 9B.

Then, the heater 21 is regulated to the temperature required for chemical reaction (in the embodiment, 60°C) and reaction is started. The first channel 37 and the second channel 39 are held at 25°C by the heat regulator 23 and the reaction channel 35 is held at 60°C, whereby the positions of the connection tube part 49a of the first channel 37, the reaction channel 35, and the connection tube part 49b of the second channel 39 along the Y direction in FIG. 2A become the temperature distribution shown in FIG. 10 on the substrate 41. Since the connection tube part 49a of the first channel 37 and the connection tube part 49b of the second channel 39 are set to 25°C, evaporation from both ends of the reaction channel 35 is extremely small and the reagent in the reaction channel 35 does not decrease. Since there is no temperature rise of air of the first channel 37 and the second channel 39 and evaporation from the reaction channel 35 is negligibly small, pressure in the pipe line does not rise and thus a pressure difference does not occur at both ends of the reaction channel 35 and the reagent does not leak from the reaction channel 35.

The above-mentioned operation of pushing back the reagent remaining in the first channel 37 to the port 13 is not necessarily required. If different types of chemical reactions are conducted in the reaction sections 47 of the reaction channels 35, the reaction reagent is put as a drip only on the reaction sections 47 and portions to be heated are only the reaction sections 47 and thus the speed at which the chemical reaction proceeds to both ends is negligibly low. Therefore, if the reagents dispensed into the reaction channels 35 are connected through the first channel 37, the reactions are not affected.

That is, according to the microfluidic chip, if the first channel 37 is not drained of liquid, the reactions in the reaction channels 35 do not interfere with each other. The fact that the first channel 37 need not be drained of liquid is effective for simplifying the operation sequence and in addition, makes it possible to ignore the relation of the condition to retain the liquid in the reaction channel 35 when the first channel 37 is drained of the liquid (equivalent tube diameter of first channel) > (equivalent tube diameter of reaction channel). Therefore, the equivalent tube diameter of the first channel 37 can be lessened as compared with that when the first channel 37 is drained of the liquid and consequently the dead volume of the tested liquid can be lessened.

According to the temperature regulation method of the microfluidic chip 200, at the same time as the reaction channel 35 is heated to the predetermined reaction temperature (60°C), the first channel 37 communicating with one end of the reaction channel 35 and the second channel 39 communicating with an opposite end of the reaction channel 35 are held at the same temperature (in the embodiment, the temperature is set to 25°C and it is advisable to set the temperature in the range of 20°C to 30°C, a temperature lower than the reaction temperature) different from the predetermined reaction temperature by heating or cooling, so that when a given quantity of liquid is heated in the channel of the chip 200 and any desired chemical reaction is obtained, a decrease in the liquid quantity and concentration of the liquid accompanying evaporation and a move of liquid can be suppressed. Accordingly, the state of the chemical reaction proceeding only in the reaction section 47 of the reaction channel 35 can be inspected on the spot in succession (for example, fluorescence detection) while heating is conducted. Consequently, stable detection of the sample can be realized. If the first channel 37 and the second channel 39 are regulated to the ambient temperature or less, lower than 20°C, dew occurs on the surface of the microfluidic chip 200 and detection of the reaction channel 35 is hindered; if they are regulated to a temperature exceeding 30°C, the liquid move prevention effect is lessened. Further, the temperature difference between: the first channel 37 and the second channel 39; and the reaction section 47 is suppressed to be small, thereby it is possible to prevent the temperature of the reaction section 47 from being unstable.

According to the temperature regulation method of the microfluidic chip according to the invention, at the same time as the reaction channel is heated to the predetermined reaction temperature, the first channel communicating with one end of the reaction channel and the second channel communicating with an opposite end of the reaction channel are held at the same temperature different from the predetermined reaction temperature by heating or cooling, so that when a given quantity of liquid is heated in the channel of the microfluidic chip and any desired chemical reaction is obtained, a decrease in the liquid quantity and concentration of the liquid accompanying evaporation and a move of liquid can be suppressed. Accordingly, the state of the chemical reaction proceeding only in the center portion of the reaction channel can be inspected on the spot in succession (for example, fluorescence detection) while heating is conducted. Consequently, stable detection of the reaction state of the sample can be realized.

The sample analysis system according to the invention includes the microfluidic chip formed with the reaction channel, the first channel, and the second channel, the first heat regulation unit that controls the temperature of the liquid poured into the reaction channel, and the second heat regulation unit that controls the temperatures of the first channel and the second channel. Thus, while the liquid in the reaction channel is heated to any desired reaction temperature by the first heat regulation unit, the first channel and the second channel in contact with the liquid can be set to the same temperature. Accordingly, if the first channel and the second channel differ in heat capacity because of the channel shape difference, etc., the temperatures in both the channels, namely, the internal pressures of the channels can be set to the same and a phenomenon in which the liquid in the reaction channel moves can be prevented.

According to the microfluidic chip according to the invention, the reagent is previously put as a drip in the upper center portion of the reaction channel in a dry state, so that the reagent is placed on the upper side of the reaction channel in a microchip use state and is heated from the lower face, whereby the reagent dissolved with temperature rise of liquid flows to the lower side of the channel by gravity, and good mixing of the reagent and the liquid by natural convection is made possible.

Only the place where the dry reagent exist is heated and a dry reagent does not exist on the first or second channel side of the reaction channel and heating is not conducted either and thus chemical reaction does not occur on the first or second channel side of the reaction channel or the proceeding speed is extremely low. Therefore, if the first channel is not drained of liquid, the reactions in the reaction channels do not interfere with each other and the liquid delivery operation sequence is simplified. Further, the size condition to retain the liquid in the reaction channel when the first channel is drained of the liquid can be ignored and the equivalent tube diameter of the first channel can be lessened as compared with that when the first channel is drained of the liquid. Consequently the dead volume of the tested liquid can be lessened.

The entire disclosure of each and every foreign patent application from which the benefit of foreign priority has been claimed in the present application is incorporated herein by reference, as if fully set forth.

## Claims

1. A temperature regulation method of a microfluidic chip for controlling a temperature of a liquid accumulated in a reaction channel formed in a flat plate of the microfluidic chip, the method comprising:
heating the reaction channel to a reaction temperature; and
at the same time as the reaction channel is heated to the reaction temperature, keeping a first channel communicating with one end of the reaction channel and a second channel communicating with an opposite end of the reaction channel at the same temperature different from the reaction temperature by heating or cooling.

2. The temperature regulation method according to claim 1,
wherein temperatures of the first channel and the second channel are regulated to temperatures lower than the reaction temperature.

3. The temperature regulation method according to claim 2,
wherein the temperatures of the first channel and the second channel are regulated to a range of 20°C to 30°C.

4. The temperature regulation method according to claim 1,
wherein after a liquid is poured from the first channel to the reaction channel, before the heating is conducted, the first channel is drained of the liquid and the liquid is left only in the reaction channel.

5. The temperature regulation method according to claim 1,
wherein before the heating is conducted, a plurality of openings communicating with the first channel and the second channel are hermetically sealed.

6. A sample analysis system, comprising:
a microfluidic chip comprising: a reaction channel formed in a flat plate; a first channel communicating with one end of the reaction channel; and a second channel communicating with an opposite end of the reaction channel;
a first heat regulation unit that controls a temperature of a liquid poured into the reaction channel; and
a second heat regulation unit that controls temperatures of the first channel and the second channel.

7. The sample analysis system according to claim 6,
wherein the second heat regulation unit controls a temperature of a liquid at the end of the reaction channel in contact with the first channel and a temperature of a liquid at the end of the reaction channel in contact with the second channel.

8. The sample analysis system according to claim 6, further comprising:
a detection unit that detects a reaction state of the liquid poured into the reaction channel and that is placed opposite to the reaction channel.

9. The sample analysis system according to claim 8,
wherein the detection unit measures fluorescence emitted by exciting the liquid in the reaction channel.

10. The microfluidic chip, which is utilized in the sample analysis system according to claim 6, the microfluidic chip further comprising:
a reagent previously put as a drip on an upper side of the reaction channel in a dry state.

11. The microfluidic chip according to claim 10,
wherein the reagent is previously put as a drip in a dry state on a channel center between the first channel side and the second channel side in the reaction channel.

12. The microfluidic chip according to claim 10,
wherein a plurality of the reaction channels are arranged in parallel.

13. The microfluidic chip according to claim 10,
wherein an upper wall face of the reaction channel is provided with a slope so that a channel height of the channel center between the first channel side and the second channel side in the reaction channel becomes lower than heights of any other than the center of the reaction channel.

14. The microfluidic chip according to claim 13,
wherein as the slope, the upper wall face is formed as a curved surface shaped like an upside-down convex projecting into the reaction channel.

15. The microfluidic chip according to claim 10,
wherein an inner wall face of the reaction channel is a continuous smooth face for preventing formation of a minute gap space not filled with a liquid when the liquid flows.

16. The microfluidic chip according to claim 10,
wherein a curvature radius of a bend part of an inner wall face of the reaction channel is 20 µm or less.
